# EUROPÄISCHE PATENTANMELDUNG

(11) **EP 4 738 673 A1**
(43) Veröffentlichungstag der Anmeldung: **06.05.2026**
(21) Anmeldenummer: 25210614.1
(22) Anmeldetag: 23.10.2025
(51) Int. Cl.: H02M 1/00, H02M 1/32, H02M 7/5387, H02M 1/08, H02M 7/487

(54) **WECHSELRICHTER FÜR WINDKRAFTANLAGE MIT VERLANGSAMTEN SCHALTFLANKEN BEI ZWISCHENKREISÜBERSPANNUNG DURCH ERHÖHTE NETZSPANNUNG**

(30) Priorität: 31.10.2024 DE 102024131826
(71) Anmelder: SEMIKRON Elektronik GmbH & Co. KG, 90431 Nürnberg (DE)
(72) Erfinder: Puukko, Joonas, 04300 Tuusula (FI)

(57) **Zusammenfassung**

Vorgestellt wird einen Stromrichter mit einem Gleichrichtermodul dessen Ausgang mit einem Gleichspannungszwischenkreis verbunden ist, mit einem Wechselrichtermodul, dessen Eingang mit dem Gleichspannungszwischenkreis verbunden ist und dessen Ausgang mit einem mehrphasigen Wechselspannungsnetz verbunden ist, wobei das Wechselrichtermodul aus einer Mehrzahl von Halbbrückenanordnungen mit jeweils einem oberen und einem unteren Halbleiterschalter, zu dem jeweils eine Freilaufdiode parallel geschaltet oder intrinsisch vorhanden ist, wobei der jeweilige Steuereingang der jeweiligen Halbleiterschalter mit einer Steuereinrichtung verbunden ist, wobei diese Steuereinrichtung derart ausgebildet ist, dass bei einer ersten Spannungserhöhung der Spannung in mindestens einer Phase des Wechselspannungsnetzes, die zu einer zweiten Spannungserhöhung der Spannung des Gleichspannungszwischenkreises führt in einem zweiten Betriebszustand mindestens einen der Halbleiterschalter derart verändert ansteuert, dass dieser ein gegenüber einem ersten Betriebszustand derart langsameres Schaltverhalten zeigt, dass eine dynamische Überspannung an diesem Halbleiterschalter derart reduziert wird, dass die an diesem Halbleiterschalter anliegende Spannung die Soll-Sperrspannung des Halbleiterschalters nicht überschreitet.

## Beschreibung

Die Erfindung beschreibt eine Stromrichteranordnung für eine Windkraftanlage mit einem Gleichrichtermodul dessen Ausgang mit einem Gleichspannungszwischenkreis verbunden ist, mit einem Wechselrichtermodul, dessen Eingang mit dem Gleichspannungszwischenkreis verbunden ist und dessen Ausgang mit einem mehrphasigen Wechselspannungsnetz verbunden ist, wobei das Wechselrichtermodul aus einer Mehrzahl von Halbbrückenanordnungen mit jeweils einem oberen und einem unteren Halbleiterschalter, zu dem jeweils eine Freilaufdiode parallel geschaltet oder intrinsisch vorhanden ist. Die Erfindung beschreibt weiterhin ein Verfahren zur Ansteuerung, insbesondere des Wechselrichtermoduls der Stromrichteranordnung.

Die DE 10 2011 077 160 A1 offenbart einen Stromrichter, der die Gleichspannung eines Solarmoduls mit einer eine Gleichspannung erzeugenden Solarzelle, und mit einem die in seinen Eingang eingespeiste wandelt, wobei der Stromrichter mindestens einen Halbleiterschalter und eine einen Schalteingang des Halbleiterschalters ansteuernde Steuerung enthält, ist die Steuerung derart ausgebildet, dass sie in einem Übergangsbetrieb des Solarmoduls mindestens einen der Halbleiterschalter derart verändert ansteuert, dass dieser ein gegenüber einem Normalbetrieb derart langsameres Schaltverhalten zeigt, dass eine dynamische Überspannung am Halbleiterschalter derart reduziert wird, dass die am Halbleiterschalter anliegende Spannung die Sperrspannung des Halbleiterschalters nicht überschreitet. Bei einem Verfahren zum Betreiben eines Solarmoduls steuert die Steuerung in einem Übergangsbetrieb des Solarmoduls den Halbleiterschalter derart verändert an, dass dieser ein gegenüber einem Normalbetrieb derart langsameres Schaltverhalten zeigt, dass eine dynamische Überspannung am Halbleiterschalter derart reduziert wird, dass die am Halbleiterschalter anliegende Spannung die Sperrspannung des Halbleiterschalters nicht überschreitet.

In Kenntnis der genannten Gegebenheiten liegt der Erfindung die Aufgabe zugrunde, diese Erkenntnisse auf andere Anwendungs- und Aufgabengebiete insbesondere im Bereich der Windkraftanlagen zu transferieren und hierbei an die geänderten Anforderungen anzupassen.

Diese Aufgabe wird erfindungsgemäß gelöst durch einen Stromrichter, insbesondere für eine Windkraftanlage, mit einem Gleichrichtermodul dessen Ausgang mit einem Gleichspannungszwischenkreis verbunden ist, mit einem Wechselrichtermodul, dessen Eingang mit dem Gleichspannungszwischenkreis verbunden ist und dessen Ausgang mit einem mehrphasigen Wechselspannungsnetz verbunden ist, wobei das Wechselrichtermodul aus einer Mehrzahl von Halbbrückenanordnungen mit jeweils einem oberen und einem unteren Halbleiterschalter, zu dem jeweils eine Freilaufdiode parallel geschaltet oder intrinsisch vorhanden ist, wobei der jeweilige Steuereingang der jeweiligen Halbleiterschalter mit einer Steuereinrichtung verbunden ist, wobei diese Steuereinrichtung derart ausgebildet ist, dass bei einer ersten Spannungserhöhung der Spannung in mindestens einer Phase des Wechselspannungsnetzes, die zu einer zweiten Spannungserhöhung der Spannung des Gleichspannungszwischenkreises führt in einem zweiten Betriebszustand mindestens einen der Halbleiterschalter derart verändert ansteuert, dass dieser ein gegenüber einem ersten Betriebszustand derart langsameres Schaltverhalten zeigt, dass eine dynamische Überspannung an diesem Halbleiterschalter derart reduziert wird, dass die an diesem Halbleiterschalter anliegende Spannung die Soll-Sperrspannung des Halbleiterschalters nicht überschreitet.

Eine intrinsische Freilaufdiode liegt bauartbedingt beispielhaft bei MOSFET Bauelementen vor.

Es ist bevorzugt, wenn der Gleichspannungszwischenkreis bei einem ersten Betriebszustand eine zulässige erste Maximalspannung aufweist, die signifikant kleiner ist als eine zweite Maximalspannung im zweiten Betriebszustand.

Es kann vorteilhaft sein, wenn die Steuereinrichtung eine den jeweiligen Halbleiterschalter ansteuernde Spannungsquelle enthält, die den Steuereingang in den unterschiedlichen Betriebszuständen mit unterschiedliche Schaltspannungen und/oder Schaltströmen beaufschlagen kann.

Es kann weiterhin vorteilhaft sein, wenn zwischen der Steuereinrichtung und dem zugeordneten Steuereingang in den unterschiedlichen Betriebszuständen mit unterschiedlichen elektrischen Widerständen unterschiedlichen Widerstandswerten ausgewählt werden können

Zudem kann es vorteilhaft sein, wenn die jeweilige Halbbrückenanordnung als eine Zwei-Level-Halbbrückenanordnung oder als eine Drei-Level-Brückenanordnung, vorzugsweise vom T-Type, oder als eine Mehr-Level-Brückenanordnung ausgebildet ist.

Grundsätzlich kann es bevorzugt sein, wenn mindestens eine der folgenden Erfassungseinrichtungen vorgesehen sind:
- eine eine Betriebstemperatur des Stromrichters überwachenden ersten Erfassungseinrichtung;
- eine eine Spannung im Gleichspannungszwischenkreis überwachenden zweiten Erfassungseinrichtung;
- eine eine Spannung im Wechselspannungsnetz überwachenden dritten Erfassungseinrichtung;
- eine eine Betriebsdauer des zweiten Betriebszustand überwachenden vierten Erfassungseinrichtung.

Die Aufgabe wird weiterhin gelöst durch ein Verfahren zum Betreiben einer oben beschriebenen erfindungsgemäßen Stromrichteranordnung, bei dem die Steuereinrichtung in einem zweiten Betriebszustand der Stromrichteranordnung mindestens einen der Halbleiterschalter derart verändert ansteuert, dass dieser ein gegenüber dem ersten Betriebszustand derart langsameres Schaltverhalten zeigt, dass eine dynamische Überspannung an diesem Halbleiterschalter derart reduziert wird, dass eine am Halbleiterschalter anliegende Spannung die Soll-Sperrspannung des Halbleiterschalters nicht überschreitet.

Hierbei kann es vorteilhaft sein, wenn der Wert der dem Schalteingang zugeführten Schaltspannungen und/oder Schaltströme ausgewählt oder verändert wird.

Es kann ebenfalls vorteilhaft sein, wenn der zwischen der Steuereinrichtung und dem zugeordneten Steuereingang angeordnete elektrische Widerstand ausgewählt oder verändert wird. Insbesondere kann hierbei zwischen elektrischen Widerständen mit unterschiedlichen Widerstandswerten ausgewählt werden, um das gewünschte langsamere Schaltverhalten zu erzielen.

Es kann bevorzugt sein, wenn eine erste Erfassungseinrichtung eine Betriebstemperatur des Stromrichters überwacht und abhängig davon Steuereinrichtung zwischen den beiden Betriebszuständen wechselt oder den Wechselrichter vollständig abschaltet.

Auch kann es bevorzugt sein, wenn eine zweite Erfassungseinrichtung die Spannung im Gleichspannungszwischenkreis überwacht und abhängig davon Steuereinrichtung zwischen den beiden Betriebszuständen wechselt oder den Wechselrichter vollständig abschaltet.

Ebenso kann es bevorzugt sein, wenn eine dritte Erfassungseinrichtung die Spannung im Wechselspannungsnetz überwacht und abhängig davon Steuereinrichtung zwischen den beiden Betriebszuständen wechselt oder den Wechselrichter vollständig abschaltet.

Schließlich kann es bevorzugt sein, wenn eine vierte Erfassungseinrichtung mit einer eine Betriebsdauer des zweiten Betriebszustands überwacht und abhängig davon Steuereinrichtung zwischen den beiden Betriebszuständen wechselt oder den Wechselrichter vollständig abschaltet.

Die Erfindung berücksichtigt hierbei grundsätzlich folgende Erkenntnissen: Im Betrieb der Schaltungsanordnung kommutiert ein Strom vom oberen Halbleiterschalter einer Halbbrücke, auf die jeweilige untere Freilaufdiode des dortigen Halbleiterschalters und zurück. Aufgrund parasitärer Induktivitäten innerhalb der Halbbrücke und deren Anschlüsse zum Gleichspannungszwischenkreis entsteht während der Kommutierung eine dynamische Überspannung an den Halbleiterschalters, die von der Stromsteilheit bei der Kommutierung also der zeitlichen Änderung des Stroms über dem Halbleiterschalter abhängt. Diese dynamische Überspannung überlagert sich mit der Spannung im Gleichspannungszwischenkreis. Beim Schalten ist daher die Halbleiterspannung die Summe aus der Soll-Spannung im Gleichspannungszwischenkreis und der dynamischer Überspannung. Diese Ist-Spannung am Halbleiterschalters darf niemals dessen maximale Sperrspannung überschreiten, da ansonsten der Halbleiterschalters beschädigt oder zerstört wird.

Grundsätzlich kann durch Variation der Beschaltung des Steuereingangs des Transistors dessen Schaltverhalten verändert werden. Die Ansteuerung des Steuereingangs erfolgt dazu durch eine Steuereinrichtung, die eine Steuerspannungsquelle über einen Widerstand mit dem Steuereingang verbindet. Das Schaltverhalten des Halbleiterschalters kann insbesondere durch Variation des Widerstandswertes oder auch des Spannungswertes der Steuerspannungsquelle genommen werden. Ein vergrößerter Widerstandswert oder eine kleinere Steuerspannung reduziert hierbei die Stromsteilheit bei der Kommutierung des Halbleiterschalters. Allerdings vergrößern sich durch diese Maßnahmen die Schaltverluste im Halbleiterschalter.

Selbstverständlich können, sofern dies nicht explizit oder per se ausgeschlossen ist oder dem Gedanken der Erfindung widerspricht, die jeweils im Singular genannten Merkmale oder Gruppen von Merkmalen mehrfach in der erfindungsgemäßen Stromrichteranordnung vorhanden sein.

Es versteht sich, dass die verschiedenen Ausgestaltungen der Erfindung, unabhängig davon, ob sie in Zusammenhang mit der Stromrichteranordnung oder mit dem Verfahren genannt sind, einzeln oder in beliebigen Kombinationen realisiert sein können, um Verbesserungen zu erreichen. Insbesondere sind die vorstehend und im Folgenden genannten und erläuterten Merkmale nicht nur in den angegebenen Kombinationen, sondern auch in anderen Kombinationen oder in Alleinstellung einsetzbar, ohne den Rahmen der vorliegenden Erfindung zu verlassen.

Weitere Erläuterungen der Erfindung, vorteilhafte Einzelheiten und Merkmale, ergeben sich aus der nachfolgenden Beschreibung der in den Figuren 1 bis 6 schematisch dargestellten Ausführungsbeispiele der Erfindung, oder von jeweiligen Teilen hiervon.
Figur 1 zeigt schematisch eine an ein Wechselspannungsnetz angeschlossene Windkraftanlage im ersten Betriebszustand.
Figur 2 zeigt schematisch eine an ein Wechselspannungsnetz angeschlossene Windkraftanlage im zweiten Betriebszustand.
Figur 3 zeigt eine erste Ausgestaltung eines Wechselrichtermodul einer erfindungsgemäßen Stromrichteranordnung.
Figur 4 zeigt verschiedene Ausgestaltungen der Halbleiterschalter für eine erfindungsgemäße Stromrichteranordnung.
Figur 5 zeigt eine zweite Ausgestaltung eines Wechselrichtermodul einer erfindungsgemäßen Stromrichteranordnung.
Figur 6 zeigt eine dritte Ausgestaltung eines Wechselrichtermodul einer erfindungsgemäßen Stromrichteranordnung.

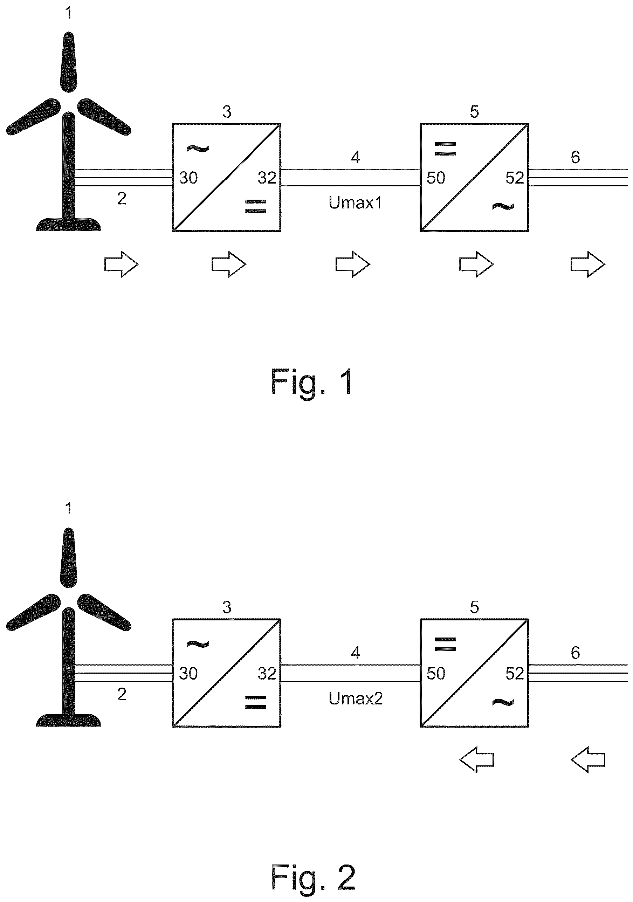

Figur 1 zeigt schematisch eine an ein Wechselspannungsnetz 6 angeschlossene Windkraftanlage 1 im ersten Betriebszustand. Typisch für derartig Anordnungen ist es, dass die Windkraftanlage 1 mit einem nicht dargestellten Generator ausgerüstet ist, der eine zeitlich variable Wechselspannung zur Verfügung stellt. Diese, hier rein beispielhaft dreiphasige, Wechselspannung 2 liegt am Eingang 30 eines Gleichrichtermodul 3 an. An seinem Ausgang 32 erzeigt das Gleichrichtermodul 3 eine Gleichspannung, die einem fachüblichen Gleichspannungszwischenkreis 4 speist.

Die Gleichspannung des Gleichspannungszwischenkreises 4 liegt am Eingang 50 eines Wechselrichtermoduls 5. Der Ausgang 52 dieses Wechselrichtermoduls 5 ist mit einem mehrphasigen Wechselspannungsnetz 6 verbunden. Mittels dieser Anordnung erfolgt eine Stromeinspeisung aus der Windkraftanlage 1 über die genannten Komponenten in das Wechselspannungsnetz 6.

Die Komponenten des Wechselrichtermoduls 5 werden im ersten Betriebszustand derart angesteuert, dass ihre Schalt- und Durchlassverluste möglichst gering ausfallen und somit die Effizienz des gesamten Anordnung möglichst hoch und ihre Verluste, die als Abwärme anfallen möglichst klein sind. Dies definiert eine zulässige erste Maximalspannung Umax1 im Gleichspannungszwischenkreis 4.

Figur 2 zeigt schematisch eine an ein Wechselspannungsnetz 6 angeschlossene Windkraftanlage 1 im zweiten Betriebszustand. Hierbei liegt im Wechselspannungsnetz 6, zumindest in einer seiner Phasen, eine erhöhte Spannung vor, die über das Wechselrichtermodul 5 in den Gleichspannungszwischenkreis 4 rückwirkt und dort die Spannung auf einen Wert erhöht, der unterhalb einer zweiten Maximalspannung Umax2 liegt.

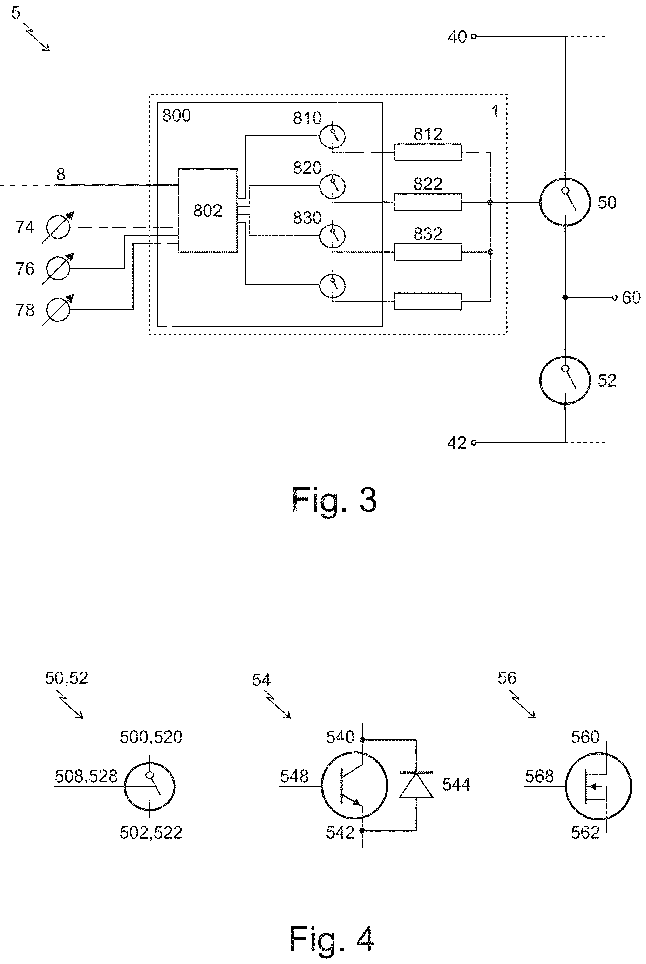

Bei einer Spannung im Gleichspannungszwischenkreis 4, die zwischen der ersten und zweiten Maximalspannung liegt, wird das erfindungsgemäße Verfahren ausgeführt. Im Folgenden wird beispielhaft anhand der Figur 3 das Vorliegen einer Spannung oberhalb der ersten Maximalspannung im Gleichspannungszwischenkreis 4 beschrieben. Im Rahmen dieses Verfahrens werden die Halbleiterschalter des Wechselrichtermoduls 5 bei mittels einer Steuereinrichtung in einem zweiten Betriebszustand derart verändert ansteuert, dass dieser ein gegenüber dem ersten Betriebszustand derart langsameres Schaltverhalten zeigt. Somit wird eine dynamische Überspannung an diesem Halbleiterschalter verringert, sodass eine am Halbleiterschalter selbst anliegende Spannung die Soll-Sperrspannung des Halbleiterschalters nicht überschreitet.

Figur 3 zeigt eine erste Ausgestaltung eines Wechselrichtermoduls einer erfindungsgemäßen Stromrichteranordnung. Figur 4 zeigt hierzu verschiedene Ausgestaltungen der Halbleiterschalter für eine derartige Stromrichteranordnung, die natürlich ebenso in den Wechselrichtermodulen gemäß der Figuren 3, 5 und 6 Verwendung finden können.

Dargestellt ist hier ein Strang eines Wechselrichtermodul 5, jeweils ausgebildet durch Zwei-Level-Halbbrückenanordnungen. Ein drei-phasiges Wechselrichtermodul 5 weist damit drei dieser Halbbrückenanordnungen auf. Die jeweilige Zwei-Level-Halbbrückenanordnungen weist einen oberen und einem unteren Halbleiterschalter 50,52 auf, zu dem jeweils eine Freilaufdiode 544 parallel geschaltet ist wie dies beim mittleren Halbleiterschalter der Figur 4 dargestellt ist. Dieser Halbleiterschalter besteht aus einem Leistungstransistor 54, beispielhaft einem IGBT mit fachüblich parallel geschalteter Freilaufdiode 544. Selbstverständlich kann, ebenfalls fachüblich, der jeweilige Halbleiterschalter 50,52 auch eine Mehrzahl von parallel geschalteten Leistungstransistoren und Freilaufdioden 544 aufweisen.

Der Steuereingang 508,828 des jeweiligen Halbleiterschalters 50,52 bildet den Gate-Anschluss 548 des Leistungstransistors aus. Der Last-Eingang 500,520 des jeweiligen Halbleiterschalters 50,52 wird durch den Kollektor-Anschluss 540 des Leistungstransistors 54 ausgebildet. Der Last-Ausgang 502,522 des jeweiligen Halbleiterschalters 50,52 wird durch den Emitter-Anschluss 542 des Leistungstransistors 54 ausgebildet.

Alternativ zu dieser Ausgestaltung kann der jeweilige Halbleiterschalt 50,52 die Freilaufdiode intrinsisch aufweisen, wie dies beispielhaft bei Leistungs-MOS-FETs 56 vorliegt. Auch hier können fachüblich einer Mehrzahl von parallel geschalteten MOS-FETs 56 den jeweiligen Leistungsschalter ausbilden.

Der Steuereingang 508,528 des jeweiligen Halbleiterschalters 50,52 bildet den Gate-Anschluss 568 des MOS-FETs aus. Der Last-Eingang 500,520 des jeweiligen Halbleiterschalters 50,52 wird durch den Drain-Anschluss 560 des MOS-FETs 56 ausgebildet. Der Last-Ausgang 502,522 des jeweiligen Halbleiterschalters 50,52 wird durch den Source-Anschluss 562 des MOS-FETs 56 ausgebildet.

Der obere Halbleiterschalter ist mit seinem Eingang mit dem positiven Zweig des Gleichspannungszwischenkreises 4 verbunden, während dessen Ausgang mit dem Eingang des unteren Halbleiterschalters 52 verbunden ist. Der Mittenabgriff zwischen dem oberen und unteren Halbleiterschalter bildet den Wechselspannungsausgang 60 der jeweiligen Halbbrückenanordnung aus und ist mit der zugeordnete Phase des Wechselspannungsnetzes 6 verbunden. Der Ausgang des unteren Halbleiterschalters 52 ist mit dem negativen Zweig des Gleichspannungszwischenkreises 4 verbunden.

Die oben beschriebene Rückkopplung aus dem Wechselspannungsnetz 6 in den Gleichspannungszwischenkreis 4 erfolgt über die Freilaufdioden, wodurch eine erhöhte Spannung im Wechselspannungsnetz 6 direkt zu einer erhöhten Spannung im Gleichspannungszwischenkreis 4 führt, die über der im ersten Betriebszustand zulässigen erste Maximalspannung Umax1 liegt. Zur Bestimmung der Spannung im Gleichspannungszwischenkreis 4 überwacht eine zweiten Erfassungseinrichtung 76; dessen Spannung. Diese zweite Erfassungseinrichtung 76 ist bei dieser Ausgestaltung mit der Steuereinrichtung 800 der Halbbrückenanordnung verbunden, die bei Vorliegen einer Spannung im Gleichspannungszwischenkreis 4 zwischen der erste Maximalspannung Umax1 und der zweiten Maximalspannung Umax2 in den zweiten Betriebszuständen wechselt. Bei Überschreiten der zweiten Maximalspannung Umax2 schaltet die Steuereinrichtung 800 die jeweilige Halbbrückenanordnung und den Wechselrichter 5 vollständig ab.

In dieser Ausgestaltung ist neben der zweiten Erfassungseinrichtung 76 noch eine die Betriebstemperatur des Stromrichters 5 überwachende ersten Erfassungseinrichtung 74 vorhanden, deren Messwert für den Umschaltprozess von der ersten in den zweiten Betriebszustand durch die Steuereinrichtung 800 berücksichtig wird. Zudem kann auch dieser Messwert allein oder mit anderen Messewerten zur vollständigen Abschaltung des Wechselrichters 5 führen.

In dieser Ausgestaltung ist neben der ersten und zweiten Erfassungseinrichtung 74,76 noch eine die Spannung im Wechselspannungsnetz überwachenden dritten Erfassungseinrichtung 78 vorhanden, deren Messwert für den Umschaltprozess von der ersten in den zweiten Betriebszustand durch die Steuereinrichtung 800 berücksichtig wird. Zudem kann auch dieser Messwert allein oder mit anderen Messewerten zur vollständigen Abschaltung des Wechselrichters 5 führen.

Es kann zudem vorteilhaft sein, wenn neben den genannten Erfassungseinrichtungen 74,76,78 noch eine die Betriebsdauer des zweiten Betriebszustand überwachenden vierten Erfassungseinrichtung vorhanden ist, deren Messwert allein oder mit anderen Messewerten zur vollständigen Abschaltung des Wechselrichters 5 führen.

Analoges gilt selbstverständlich für den Wechsel vom zweiten zurück in den ersten Betriebszustand.

Hierzu ist die jeweiligen Steuereinrichtung 800 der Halbbrückenanordnung mit dem jeweilige Steuereingang 508,528 der jeweiligen Halbleiterschalter 50,52 verbunden. Zur Ausführung des erfindungsgemäßen Verfahrens ist die jeweilige Steuereinrichtung 800 derart ausgebildet ist, dass bei einer ersten Spannungserhöhung der Spannung 600 in mindestens einer Phase des Wechselspannungsnetzes 6, die zu einer zweiten Spannungserhöhung der Spannung 400 des Gleichspannungszwischenkreises 4 führt in einem zweiten Betriebszustand mindestens einen der Halbleiterschalter 50,52 derart verändert ansteuert, dass dieser ein gegenüber einem ersten Betriebszustand, ein langsameres Schaltverhalten zeigt. Hierdurch wird die dynamische Überspannung an diesem Halbleiterschalter 50,52 derart reduziert, dass die an diesem Halbleiterschalter 50,52 anliegende Spannung 70,72 die Soll-Sperrspannung des Halbleiterschalters 50,52 nicht überschreitet.

Hierzu weist die Steuereinrichtung 800 eine den jeweiligen Halbleiterschalter 50,52 ansteuernde Spannungsquelle 810,820,830 auf, die den Steuereingang in den unterschiedlichen Betriebszuständen mit unterschiedliche Schaltspannungen und/oder Schaltströmen beaufschlagen kann.

Zudem ist zwischen der Steuereinrichtung 800 und dem zugeordneten Steuereingang 508,528 in den unterschiedlichen Betriebszuständen mit unterschiedlichen elektrischen Widerständen 812,822,832 unterschiedlichen Widerstandswerten ausgewählt werden können.

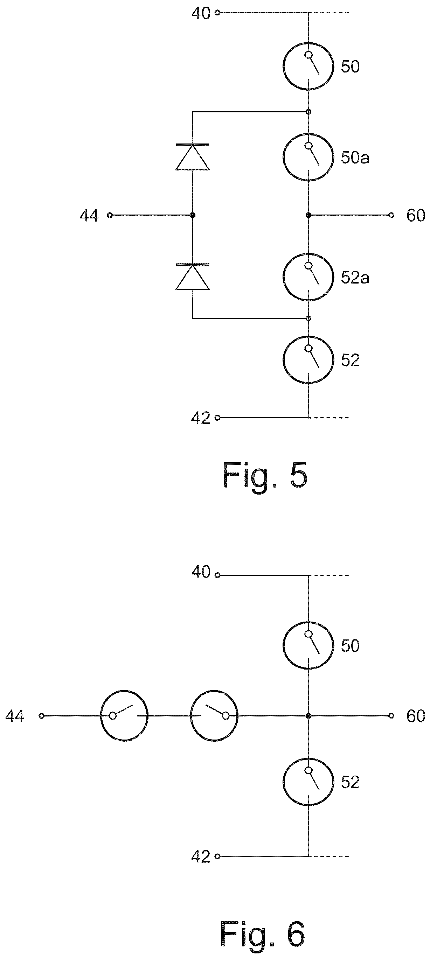

Figur 5 zeigt eine zweite Ausgestaltung eines Wechselrichtermoduls einer erfindungsgemäßen Stromrichteranordnung. Dargestellt ist hier ein Strang eines Wechselrichtermodul 5, jeweils ausgebildet durch eine fachüblich Drei-Level-Brückenanordnungen in NPC-Topologie. Ein drei-phasiges Wechselrichtermodul 5 weist damit drei dieser Brückenanordnungen auf. Die jeweilige Drei-Level-Brückenanordnungen weist zwei seriell geschaltete oberen und zwei seriell geschaltete unteren Halbleiterschalter 52a,52 auf, die einen zusätzlichen, fachüblichen Neutralanschluss 44 aufweisen. Die jeweiligen Halbleiterschalter können grundsätzlich identisch zu denen der Halbbrückenanordnung gemäß Figur 3 ausgebildet sein.

Selbstverständlich kann die jeweilige Drei-Level-Brückenanordnung auch in A-NPC-Topologie oder in einer verwandten Topologie ausgebildet sein.

Figur 6 zeigt eine dritte Ausgestaltung eines Wechselrichtermodul einer erfindungsgemäßen Stromrichteranordnung. Dargestellt ist hier ein Strang eines Wechselrichtermodul 5, jeweils ausgebildet durch eine fachüblich Drei-Level-Brückenanordnungen in T-NPC-Topologie. Ein drei-phasiges Wechselrichtermodul 5 weist damit drei dieser Brückenanordnungen auf. Die jeweiligen Halbleiterschalter können grundsätzlich identisch zu denen der Halbbrückenanordnung gemäß Figur 3 ausgebildet sein.

## Patentansprüche

1. Stromrichteranordnung, insbesondere für eine Windkraftanlage, mit einem Gleichrichtermodul 3 dessen Ausgang 32 mit einem Gleichspannungszwischenkreis 4 verbunden ist, mit einem Wechselrichtermodul 5, dessen Eingang 50 mit dem Gleichspannungszwischenkreis 4 verbunden ist und dessen Ausgang 52 mit einem mehrphasigen Wechselspannungsnetz 6 verbunden ist, wobei das Wechselrichtermodul 5 aus einer Mehrzahl von Halbbrückenanordnungen mit jeweils einem oberen und einem unteren Halbleiterschalter 50,52, zu dem jeweils eine Freilaufdiode 544 parallel geschaltet oder intrinsisch vorhanden ist, wobei der jeweilige Steuereingang 508,528 der jeweiligen Halbleiterschalter 50,52 mit einer Steuereinrichtung 800 verbunden ist, wobei diese Steuereinrichtung 800 derart ausgebildet ist, dass bei einer ersten Spannungserhöhung der Spannung 600 in mindestens einer Phase des Wechselspannungsnetzes 6, die zu einer zweiten Spannungserhöhung der Spannung 400 des Gleichspannungszwischenkreises 4 führt in einem zweiten Betriebszustand mindestens einen der Halbleiterschalter 50,52 derart verändert ansteuert, dass dieser ein gegenüber einem ersten Betriebszustand derart langsameres Schaltverhalten zeigt, dass eine dynamische Überspannung an diesem Halbleiterschalter 50,52 derart reduziert wird, dass die an diesem Halbleiterschalter 50,52 anliegende Spannung die Soll-Sperrspannung des Halbleiterschalters 50,52 nicht überschreitet.

2. Stromrichteranordnung nach Anspruch 1, wobei
der Gleichspannungszwischenkreis 4 bei einem ersten Betriebszustand eine zulässige erste Maximalspannung (Umax1) aufweist, die signifikant kleiner ist als eine zweite Maximalspannung (Umax2) im zweiten Betriebszustand.

3. Stromrichteranordnung nach einem der vorhergehenden Ansprüche, wobei die Steuereinrichtung 800 eine den jeweiligen Halbleiterschalter 50,52 ansteuernde Spannungsquelle 810,820,830 enthält, die den Steuereingang in den unterschiedlichen Betriebszuständen mit unterschiedliche Schaltspannungen und/oder Schaltströmen beaufschlagen kann.

4. Stromrichteranordnung nach einem der vorhergehenden Ansprüche, wobei zwischen der Steuereinrichtung 800 und dem zugeordneten Steuereingang 508,528 in den unterschiedlichen Betriebszuständen mit unterschiedlichen elektrischen Widerständen 812,822,832 unterschiedlichen Widerstandswerten ausgewählt werden können.

5. Stromrichteranordnung nach einem der vorhergehenden Ansprüche, wobei die jeweilige Halbbrückenanordnung als eine Zwei-Level-Halbbrückenanordnung oder als eine Drei-Level-Brückenanordnung, vorzugsweise vom T-Type, oder als eine Mehr-Level-Brückenanordnung ausgebildet ist.

6. Stromrichteranordnung nach einem der vorhergehenden Ansprüche, wobei mindestens eine der folgenden Erfassungseinrichtungen vorgesehen sind:
• eine eine Betriebstemperatur des Stromrichters 5 überwachenden ersten Erfassungseinrichtung 74;
• eine eine Spannung im Gleichspannungszwischenkreis überwachenden zweiten Erfassungseinrichtung 76;
• eine eine Spannung im Wechselspannungsnetz überwachenden dritten Erfassungseinrichtung 78;
• eine eine Betriebsdauer des zweiten Betriebszustand überwachenden vierten Erfassungseinrichtung.

7. Verfahren zum Betreiben einer Stromrichteranordnung nach einem der Ansprüche 1 bis 6, bei dem die Steuereinrichtung 800 in einem zweiten Betriebszustand der Stromrichteranordnung mindestens einen der Halbleiterschalter 50,52 derart verändert ansteuert, dass dieser ein gegenüber dem ersten Betriebszustand derart langsameres Schaltverhalten zeigt, dass eine dynamische Überspannung an diesem Halbleiterschalter 50,52 derart reduziert wird, dass eine am Halbleiterschalter 50,52 anliegende Spannung die Soll-Sperrspannung des Halbleiterschalters 50,52 nicht überschreitet.

8. Verfahren nach Anspruch 7, wobei
der Wert der dem Schalteingang 508,528 zugeführten Schaltspannungen 810,820,830 und/oder Schaltströme ausgewählt oder verändert wird.

9. Verfahren nach einem der Ansprüche 7 oder 8, wobei
der zwischen der Steuereinrichtung 800 und dem zugeordneten Steuereingang 508,528 angeordnete elektrische Widerstand 812,822,832 ausgewählt oder verändert wird.

10. Verfahren nach Anspruch 9, wobei
zwischen elektrischen Widerständen 812,822,832 mit unterschiedlichen Widerstandswerten ausgewählt wird.

11. Verfahren nach einem der Ansprüche 7 bis 10, wobei
eine erste Erfassungseinrichtung 74 eine Betriebstemperatur des Stromrichters 6 überwacht und abhängig davon Steuereinrichtung 800 zwischen den beiden Betriebszuständen wechselt oder den Wechselrichter 5 vollständig abschaltet.

12. Verfahren nach einem der Ansprüche 7 bis 11, wobei
eine zweite Erfassungseinrichtung 76 die Spannung im Gleichspannungszwischenkreis überwacht und abhängig davon Steuereinrichtung 800 zwischen den beiden Betriebszuständen wechselt oder den Wechselrichter 5 vollständig abschaltet.

13. Verfahren nach einem der Ansprüche 7 bis 12, wobei
eine dritte Erfassungseinrichtung 78 die Spannung im Wechselspannungsnetz 6 überwacht und abhängig davon Steuereinrichtung 800 zwischen den beiden Betriebszuständen wechselt oder den Wechselrichter 5 vollständig abschaltet.

14. Verfahren nach einem der Ansprüche 7 bis 13, wobei
eine vierte Erfassungseinrichtung mit einer eine Betriebsdauer des zweiten Betriebszustands überwacht und abhängig davon Steuereinrichtung 800 zwischen den beiden Betriebszuständen wechselt oder den Wechselrichter 5 vollständig abschaltet.
